# EUROPEAN PATENT APPLICATION

(11) **EP 1 294 210 A1**
(43) Date of publication of application: **19.03.2003**
(21) Application number: 01410114.1
(22) Date of filing: 12.09.2001
(51) Int. Cl.: H04Q 7/38

(54) **Method and system of providing a subscriber service**

(71) Applicant: Hewlett Packard Company, a Delaware Corporation, Palo Alto, CA 94304 (US)
(72) Inventor: Pedersen, Claus, 38610 Venon (FR)
(74) Representative: Lloyd, Richard Graham

(57) **Abstract**

A method of providing an audio service to a subscriber communication device over a communication network, the method comprising the steps of; identifying a portion of the communication network in accordance with a selection criterion, identifying a subscriber communication device within said portion, and transmitting an offer message to the subscriber communication device to offer an audio service.

## Description

### Field of Invention

This invention relates to a method of providing an service and an service system operable to perform the method.

### Background of the Invention

It is known to supply audio services to communication devices, both to fixed land line telephones and to cellular radio telephones, in which a user can ring up a service provider and receive a suitable audio service over the telephone, for example, news information or music. To provide such a service , it is known to supply a streamed audio channel to a mobile communication device.

An aim of the invention is to provide a new or improved method of providing an audio service to a communication device.

### Summary of the Invention

According to a first aspect of the invention, we provide a method of providing a service to a subscriber communication device over a communication network, the method comprising the steps of identifying a portion of the communication network according to a selection criterion, wherein the portion has a capacity and the selection criterion relates to the proportion of that capacity in use, identifying a subscriber communication device within said portion, and transmitting an offer message to the subscriber communication device to offer a service.

In the following specification, a "subscriber communication device" refers to a communication device which is identified as belonging to or being used by a user who is a subscriber to the service.

The capacity of the portion may be a bandwidth capacity.

The selection criterion may be that the proportion of the capacity of the portion in use is below a first threshold.

The communication network may comprise a cellular radio telephone network, and the portion may comprise a cell of the cellular radio telephone network.

The method may comprise the step of monitoring the proportion of the capacity in use in the cell, and when the proportion in use exceeds a second threshold, sending a message to the subscriber communication device.

The step of identifying a subscriber communication device may comprise the steps of receiving an identifier of a communication device and reading a subscriber information store to confirm whether the communication device is a subscriber communication device.

The identifier may be received from a mobile switching centre associated with a cell.

The method may comprise the step of receiving an acceptance signal from the subscriber communication device and commencing to supply a service in response to the acceptance signal.

The method may comprise the step of routing an incoming call for the subscriber communication device to a service system when a service is being supplied to the subscriber communication device, and sending a notification message to the subscriber communication device.

The method may comprise the step of receiving a call acceptance signal from the subscriber communication device and routing the call from the service system to the subscriber communication device.

The method may comprise the step of routing the call to the subscriber communication device and supplying the service to the subscriber communication device simultaneously.

Alternatively, the service may be suspended and the call may be routed to the subscriber communication device.

The step of sending a message to the communication device may comprise the step of sending tariff information.

The service may comprise an audio service.

According to a second aspect of the invention, we provide a service system operable to perform a method according to the first aspect of the invention.

The service system may comprise a subscriber information store.

The service system may comprise a message server operable to generate a message to be transmitted to the communication device.

The service system may comprise an audio server operable to provide an audio service.

The present invention thus permits a service to be offered to a potential user at a time when the bandwidth usage in the communication network is sufficiently low, thus potentially generating additional revenue for the network owner at a time of low usage.

### Brief Description of the Figures

The invention will now be described by way of example only with reference to the accompanying drawings wherein;
Figure 1 is a schematic diagram of a service system embodying the present invention,
Figure 2 is a schematic flow diagram of a method embodying the present invention,
Figure 3 is a further flow diagram of a method embodying the present invention,
Figure 4 is a flow diagram of a part of a method embodying the present invention,
Figure 5 is a diagrammatic illustration of a further service system embodying the present invention, and
Figure 6 is a diagramatic illustration of a service provided by a system embodying the present invention.

### Description of the Preferred Embodiments

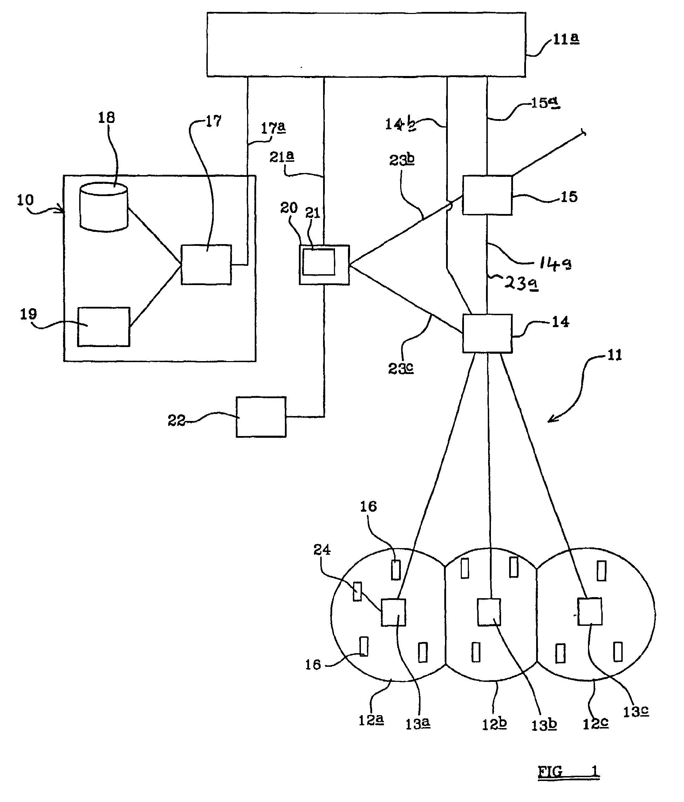

Referring now to Figure 1, a service system is generally indicated at 10. A communication network is generally indicated at 11, in the present example comprising a mobile cellular radio telephone network comprising a plurality of cells 12a, 12b, 12c, each provided with a respective base station 13a, 13b, 13c connected to a mobile switching centre 14 via a base station controller (not shown) in conventional manner. The mobile switching centre 14 is connected to a node 15 of a public switched telephone network (PSTN) by a voice path 14a, the node 15 comprising for example a service switching point (SSP). Each base station 13a, 13b, 13c, is operable in conventional manner to communicate with a plurality of active mobile communication devices, particularly cellular telephones 16, located in the respective cell 12a, 12b, 12c.

The service system 10 comprises a service point 17 operable to communicate with the communication network 11, a subscriber information store 18, and a network information store 19. The service point 17 comprises a service control point (SCP) in SS7 terminology. In this example, the service offered by the service system 10 comprises an audio service, and a message server 20 receives content from one or more media sources, here shown at 22, which make audio content available for onward transmission by the server 20. The message server 20 further comprises a message generator 21, and in this example comprises an Intelligent Peripheral operable to receive instructions from the service point 17 via the signalling layer 11a.

The mobile switching centre 14, node 15 service point 17 and message server 20 are connected to a signalling layer 11a by type A links 14a, 15a, 17a respectively. Call set up, management and tear down are managed in conventional manner by the signalling layer 11a, in the present example using the SS7 protocol. Voice paths may be established between the node 15, mobile switching centre 14 and message server 20, represented in Figure 1 by voice paths 23a, 23b, 23c.

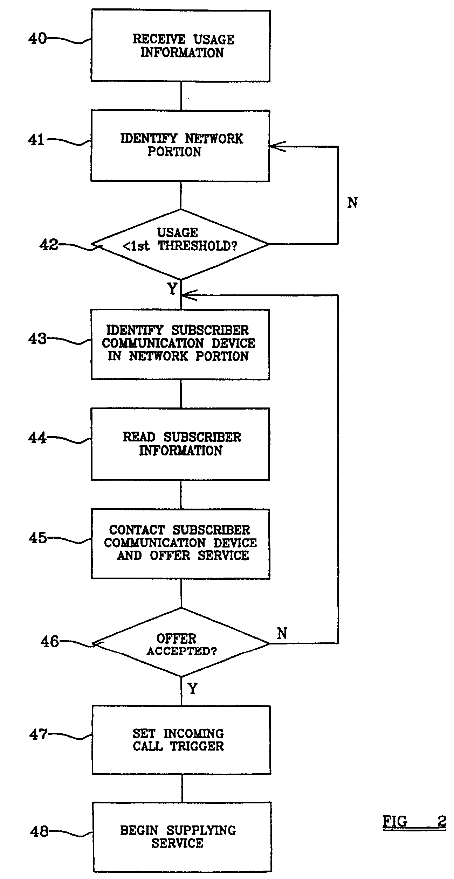

The system operates as follows with reference to Figures 2 to 4. To be able to use a service supplied by the supply service 10, a user subscribes to the service. Subscriber details, including billing information where appropriate are held in the subscriber information store 18, and will include details of the mobile communication device belonging to that subscriber and in particular an identifier corresponding to the communication device, for example the device's SIM card number. The subscriber details may include offer preference information, such as the type of audio service or audio content required, the times when a service would be acceptable, and any other information as desired.

In conventional operation, each active mobile communication device 16 in a cell 12a, 12b, 12c will automatically identify itself to the base station 13a, 13b, 13c located in that cell. Each base station 13a, 13b, 13c, will therefore be aware of each active mobile communication device 16 within the cell, and also the proportion of the bandwidth capacity of the base station 13a, 13b, 13c currently in use. This information is transmitted in standard manner to a base station controller (not shown). In conventional manner, a base station controller is operable to transmit information in connection with a specific base station to the mobile switching centre 14, in this case the proportion of the bandwidth capacity and the base station in use. The mobile switching centre 14 in turn passes the information to the service system 10 as shown at step 40 where it is held in the network information store 19. The service system 10 is therefore able to identify from the network information store 19 which portion of the network 11, i.e. which cell 12a, 12b, 12c, if any has a proportion of its bandwidth capacity in use which is less than a predetermined first threshold, as shown at steps 41 and 42.

Where a cell has a proportion of its bandwidth capacity in use which is less than the first threshold, in the present example cell 12a, the service point 17 is then operable to compare the identifiers for each mobile communication device 16 in the identified cell 12a with the subscriber information held in the subscriber information store 18. As shown in step 43 and 45, where a mobile communication device 16 is found which has an identifier contained in the subscriber information store, that is the mobile communication device 16 having that identifier is identified as belonging to or used by a user who is a subscriber to a service, hereinafter called a subscriber information device 24, the audio service point sends appropriate instructions to the message server 20 via the signalling layer 11a. The message generator 21 generates an offer message which the message server 20 sends to the subscriber communication device 24 offering an appropriate audio service in accordance with any preference information held in the subscriber information store 18. The offer message may include tariff or price information. The message may for example comprise a voice call generated by the message generator 21 and transmitted to the subscriber communication device 24 in conventional manner by the voice path 23c and MSC 14, or may alternatively comprise a text message. To enable the service to begin, at step 46 the user of the subscriber communication device 22 preferably should positively accept the service, so that for example if the message offering the service has gone through to voice mail, the service system 10 will not be supplying an unwanted service. The user may for example accept the service by pressing a specific key on the subscriber communication device 24 which is detected in conventional manner by the service system 10, for example by sending a DTMF tone, or the user may verbally accept the service such that a voice recognition means on the message server 20 identifies the user acceptance or by any other means as desired, wherein the service will be supplied at step 48. The service, in this example comprising audio content supplied by the media source 22, will then be supplied by the message server 20 to the subscriber communication device 24.

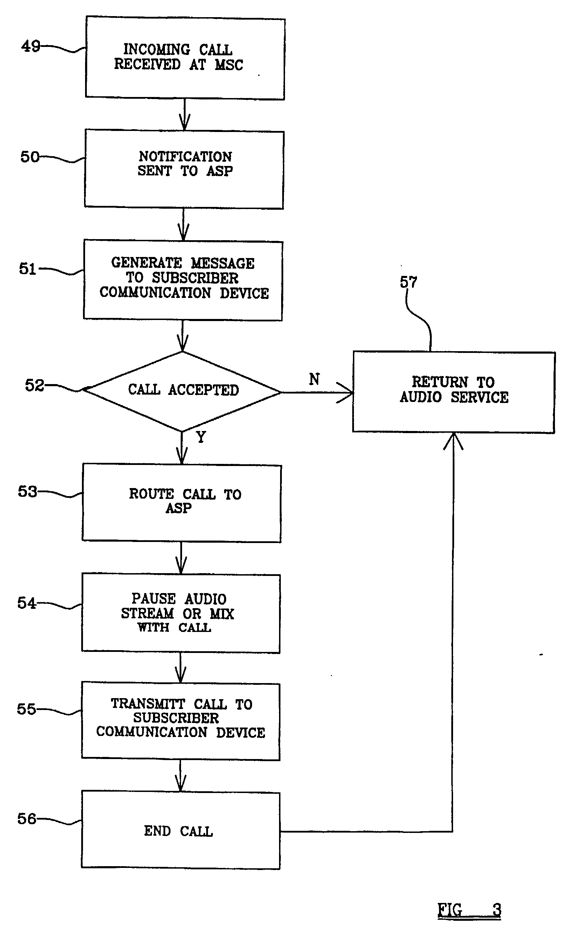

It is desirable that the subscriber communication device 22 is able to receive incoming calls while an audio service is being supplied by the audio service system 10. A conventional call waiting facility may be provided such that the user will be notified of an incoming call and be able to switch between the audio service and incoming call in conventional manner. Alternatively, under the SS7 signalling protocol a service control point (SCP) such as the service point 17 can set a trigger at a suitable exchange as shown at step 47, in the present example by using the MAP protocol. In the present example, the service system 10 sets a trigger at the mobile switching centre 14 such that when an incoming call is received from the node 15 by voice path 23a as shown at step 49 in Figure 3, a notification is sent to the service point 17 as shown at step 50 via the signalling layer 11a. At step 51, the service system 10 then sends a instruction to the message server 20 to generate an appropriate notification message using the message generation module 21 and send it to the subscriber communication device 24 to notify the user that there is an incoming call. At step 52 the user of the subscriber communication device 24 may decline the call and carry on listening to the audio service or choose another option, such as to accept the call and to pause the audio service, or to receive the call and the audio service simultaneously or any other appropriate option as may be desired. Where the user of the subscriber communication device 24 accepts the call, at step 53 the voice path 23a is released in conventional manner and voice path 23b established routing the call to the message server 20. At step 54 the message server 20 can then mix the audio service from the media source 22 with the incoming call as desired and at step 55 route the call by voice path 23c to the mobile switching centre 14 for onward transmission to the subscriber communication device 24. In this manner, tromboning of the call on connection 14a from the mobile switching centre 14 to the message server 20 and back is prevented. When the call is terminated at step 56, the voice path 23b between the audio service point 17 and node 15 is released in conventional manner and the audio service resumed or continued from the message server 20 to the mobile switching centre 14 and on to the subscriber communication device 22 as shown at step 57.

It may be desirable that when the bandwidth usage within the cell 12a exceeds a second predetermined threshold that the user of the subscriber communication device 24 be asked to cease using the audio service or agree to pay a higher revenue rate. This may arise from revenue considerations, in that the charge for voice calls to communication devices 16 within the cell may be higher than the charge for receiving an audio service, and it would be desirable to maximise revenue by making a greater part of the bandwidth capacity of the base station 13a available for higher value voice calls. It may also be desirable to increase bandwidth availability within the cell 12a for voice calls.

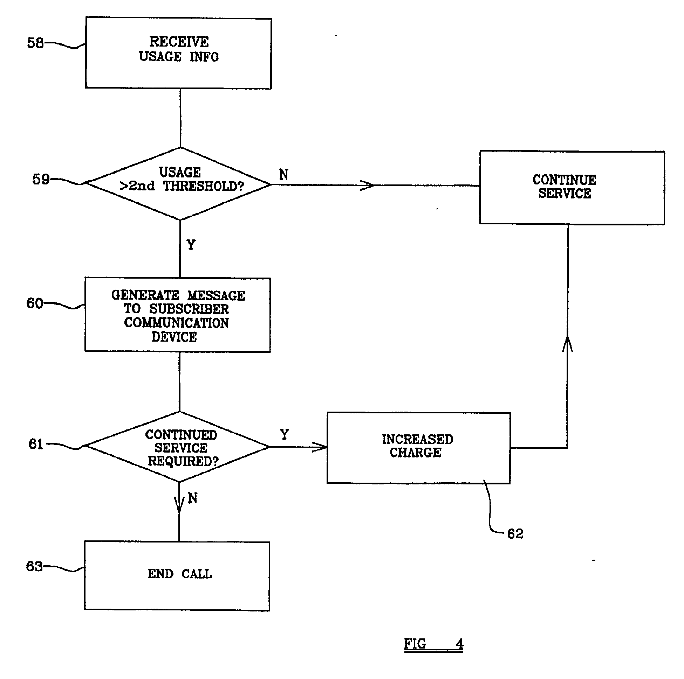

Accordingly, referring to Figure 4, when the bandwidth usage information from the base station 13a transmitted via the mobile switching centre 14 to the service system 10 as shown at step 58 indicates that the bandwidth usage within the cell 12a exceeds a second predetermined threshold as shown at step 59, the service system 10 instructs the message server 20 to generate a message at step 60 to the subscriber communication device 24 asking the user if they wish to continue using the service at a higher revenue rate or to cease using the service. At step 61, the user may again assent to continue using the service and pay a higher revenue rate as indicated at step 62, again for example by pressing a key on the subscriber communication device 24 to generate a DTMF tone which is recognised by the message server 20 and reported to the, or else the default setting may be that the service will continue to be supplied at the higher revenue rate unless the user of the subscriber communication device 24 interrupts or otherwise ends the audio service at step 63, for example by ending the connection to the message server 20.

It will be apparent that the subscriber using the subscriber communication device 24 may move to a different cell, for example into cell 12b. If the bandwidth usage of the new cell 12b exceeds the second predetermined threshold, the user of the subscriber communication device 24 is similarly asked to cease using the audio service or agree to pay a higher rate as discussed above.

Where the user is billed for use of the subscriber communication device 24, the service point 17 records the time in the subscriber information store 18 for billing purposes. Alternatively, where the subscriber communication device 24 comprises a prepaid device, the subscriber information store 18 in the present example will include account information. During the call, the service system 10 will regularly debit the account, and if the credit in the account is insufficient, it will end the call. Indeed, where the user of the subscriber communication device 24 has a prepaid account, the service system 10 at step 44 of Figure 2 may check that there is sufficient credit in the user's account before offering the service at step 45.

It will be apparent that the billing information may be stored in any appropriate billing system or location as desired, and not necessarily in the subscriber information store 18 of the service system 10.

It will be apparent that the audio services may comprise any appropriate audio service, for example a news service, music service, sports commentary or any other appropriate service as desired. The media source 22 may be provided as part of the service system 10, or may alternatively comprise a third party system which supplies audio content to the audio service system 10 for onwards transmission to any subscriber communications device 24. The audio content may be streamed in conventional manner or provided as otherwise desired. Where the media source 22 is under the control of the service system 10, and where the audio content is streamed, it will be apparent that the audio service system 10 may be operable to pause or retransmit part of the audio screen at the request of the user by the user sending appropriate commands from the mobile communication device 24.

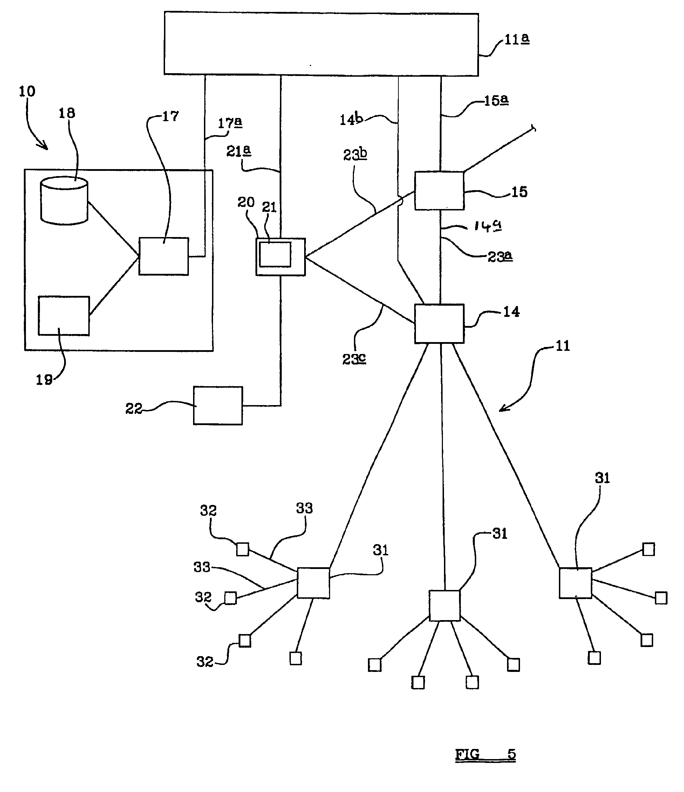

It is particularly envisaged that the present invention will be used in conjunction with a cellular radio telephone network, but it will be apparent that the present invention may be used with any communication network as desired. In Figure 5, a service system 10' and message server 20' similar to those shown in Figure 1 are schematically illustrated connected to a node 15 comprising a service switching point of a PSTN as before. In this example, however a communication network 11' comprises a further part of the PSTN, and the mobile switching point 14, base stations 13a, 13b, 13c and mobile communication devices 16 are replaced by a plurality of service switching points (SSPs) 30 connected by voice paths 31. Communication devices 32 are connected to the SSPs 30 by fixed lines 33. The node 15, service system 10' and service switching points 30 are all connected to a signalling layer 11a in conventional manner. As in the embodiment of Figure 1, the signalling layer 11a is responsible for call set up, management and tear down in conventional manner. The communication devices 32 may for example comprise conventional telephones. The server system 10' is operable in exactly the same way as in the embodiment of Figure 1, with the exception that the number and identifier of each communication device 32 linked to a given SSP 30 will be known and generally fixed. The selection criterion for identifying a portion of the communication network 11 is in this example based on the known traffic capacity of each SSP 30 and the proportion of that capacity in use by the communication devices 32.

Although the example described hereinbefore relates to audio services, it will be apparent that any suitable service may be supplied as appropriate. For example, video content or other viewable content may be supplied to appropriate subscriber communication devices, which may be identified in the subscriber information store as being capable of receiving such services. The service may simply comprise a notification, as part of the offer message, that tariffs for calls made within the network portion will be reduced for a given period of time or any other advertisement or inducement to use the subscriber communication device as appropriate.

The present invention thus combines network information, in the present example subscriber location and bandwidth use in a network portion, with subscriber information, in the present example which services the subscriber would wish to receive, to offer audio services in a targeted manner. The method according to the present invention is thus particularly cost effective for an operator of a communication network in that the operator is able to generate revenue by offering services which would make use of otherwise currently unused network resources.

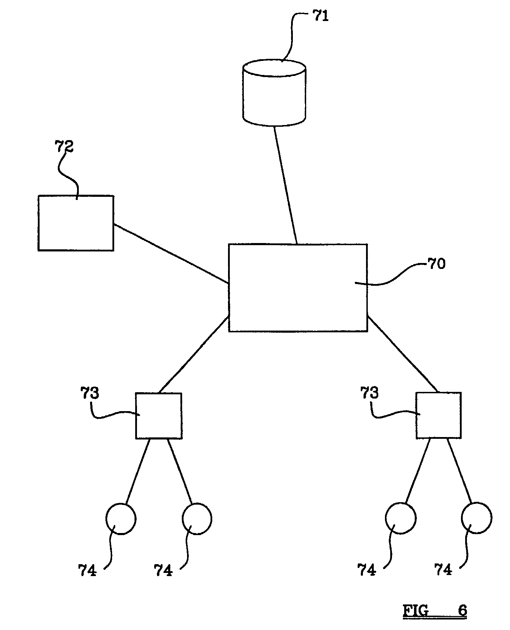

An example of a sevice which may be provided in accordance with the present invention is offering conference calls or 'chat-room' calls. As generally illustrated in Figure 6, a chat service point 70 is provided having a similar functionality to the service point 17. The chat service point 70 is provided with subscriber information 71 and network information 72. As described hereinbefore, the network information comprises bandwidth capacity and usage information within portions of a communications network, and the location of subscriber communciation devices in the communications network. The chat service point 70 is operable to send instructions to suitable nodes 73 of the network, for example MSCs in a cellular radio telephone network. Each node 73 is operable to establish a voice path to one or more subscriber communication devices 74 and/or to other nodes as appropriate in conventional manner.

The service may be operated as follows. The subscriber information 71, in addition to the information described with reference to Figure 1, will include an indication that the subscriber wishes to particpate in chat-room calls, the times of day when the subscriber would be willing to participate in such calls and lists of those subscribers the subscriber would wish to talk to in such calls. This subscriber information is referred to as the subscriber's 'chat profile' and may be modified by the subscriber as desired.

When the network information 71 indicates that the capacity of a network portion currently in use is below a first threshold, the chat service point 70 identifies a subscriber communication device in the network portion and one or more other subscribers identified in the chat profile. The service point 70 then sends a message to the subscriber communications device 74 offering the chat service. If the user of the subscriber communications device accepts the service, the chat service point 70 similarly invites one or more subscribers identified in the chat profile to participate. The user of the subscriber communication device 74 may select those subscribers to whom they wish to talk from those available.

As discussed hereinbefore, each participant in the call will still be able to receive other calls. Similarly, when the capacity of the network portion in use exceeds a second threshold, the chat service point 70 may send a message to the subscriber offering the choice of continuing with the call at a higher tariff or ending the call.

Although the present invention has been described with reference to the SS7 and GSM protocols, it will be apparent that communication via the signalling layer may be SS7 or IP based and the voice paths may be time division multiplexed or packet-based, or otherwise implemented as desired. The audio services routed through the message server 20 may be selected or configured as part of the user's profile, and may be supplied via the Internet. The user may be offered a selection of services in accordance with the user's profile or stored subscriber information or otherwise.

In the present specification "comprises" means "includes or consists of" and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A method of providing a service to a subscriber communication device over a communication network, the method comprising the steps of;
identifying a portion of the communication network in accordance with a selection criterion, wherein the portion has a capacity and the selection criterion relates to the proportion of that capacity in use.
identifying a subscriber communication device within said portion, and
transmitting an offer message to the subscriber communication device to offer a service.

2. A method according to claim 1 wherein the capacity of the portion is a bandwidth capacity.

3. A method according to claim 1 or claim 2 wherein the selection criterion is that the proportion of the capacity of the portion in use is below a first threshold.

4. A method according to any of claims 1 to 3 wherein the communication network comprises a cellular radio telephone network.

5. A method according to claim 4 wherein the portion comprises a cell of the cellular radio telephone network.

6. A method according to claim 4 comprising the step of monitoring the proportion of the capacity in use in the cell, and when the proportion in use exceeds a second threshold, sending a message to the subscriber communication device.

7. A method according to any one of claims 4 to 6 wherein the step of identifying a subscriber communication device comprises the steps of receiving an identifier of a communication device, and reading a subscriber information store to confirm whether the communication device is a subscriber communication device.

8. A method according to claim 7 comprising the step of receiving the identifier from a mobile switching centre associated with a cell of the cellular radio telephone network.

9. A method according to any one of the preceding claims comprising the step of receiving an acceptance signal from the subscriber communication device and commencing supply of a service in response to the acceptance signal.

10. A method according to any one of the preceding claims comprising the step of routing an incoming call for the subscriber communication device to an service system when a service is being supplied to the subscriber communication device, and sending a notification message to the subscriber communication device.

11. A method according to claim 10 comprising the step of receiving an acceptance signal from the subscriber communication device and routing the call from the audio service system to the subscriber communication device.

12. A method according to claim 11 comprising the step of routing the call to the subscriber communication device and supplying the service to the subscriber communication device simultaneously.

13. A method according to claim 11 comprising the step of suspending the audio service and routing the call to the subscriber communication device.

14. A method according to any one of the preceding claims wherein the service comprises an audio service.

15. A method according to any one of the preceding claims wherein the step of sending a message to the communication device comprises the step of sending tariff information.

16. A service system operable to perform a method according to any one of the preceding claims.

17. An service system according to claim 16 comprising a subscriber information store.

18. A system according to claim 16 or claim 17 comprising a message server operable to generate a message to be transmitted to the subscriber communication device.

19. A system according to any one of claims 16 to 18 comprising an audio server operable to provide the audio service.
